# EUROPÄISCHE PATENTANMELDUNG

(11) **EP 4 553 306 A1**
(43) Veröffentlichungstag der Anmeldung: **14.05.2025**
(21) Anmeldenummer: 24208488.7
(22) Anmeldetag: 23.10.2024
(51) Int. Cl.: F02C 6/08, F02C 7/224, F02K 3/115

(54) **FLUGZEUGANTRIEB UND VERFAHREN ZUM BETREIBEN EINES FLUGZEUGANTRIEBS**

(30) Priorität: 07.11.2023 DE 102023130791
(71) Anmelder: MTU Aero Engines AG, 80995 München (DE)
(72) Erfinder: Gschwend, Felix, 80995 München (DE)

(57) **Zusammenfassung**

Die Erfindung betrifft einen Flugzeugantrieb (10), aufweisend ein Triebwerk (11), eine Brennstoffversorgungseinrichtung (12), eine Luftkühleinrichtung (13) und eine Wärmetauscheinrichtung (50), wobei die Wärmetauscheinrichtung (50) eingerichtet ist, thermische Energie zwischen einem Brennstoffstrom (B) und einem Luftstrom (L) zu übertragen.

## Beschreibung

Die Erfindung betrifft einen Flugzeugantrieb, aufweisend ein Triebwerk, eine Brennstoffversorgungseinrichtung, eine Luftkühleinrichtung und eine Wärmetauscheinrichtung, die eingerichtet ist, thermische Energie zwischen einem Brennstoffstrom der Brennstoffversorgungseinrichtung und einem Luftstrom der Luftkühleinrichtung zu übertragen. Zudem betrifft die Erfindung ein Verfahren zum Betreiben eines Flugzeugantriebs.

Bei der Entwicklung von Flugzeugantrieben werden zunehmend höhere Ansprüche an ein Thermal-Management-System gestellt. Typischerweise wird im Betrieb eines Flugtriebwerks eine erlaubte Höchsttemperatur eines zu verbrennenden Kraftstoffs nur im Auslegungsbetriebspunkt erreicht. In allen weiteren Betriebspunkten wird eine verfügbare Wärmekapazität des Kraftstoffs nicht vollumfänglich ausgenutzt und Kraftstoff wird kälter verbrannt, als es für einen optimalen Wärmehaushalt der Fall wäre.

Hiervon ausgehend ist es eine Aufgabe der vorliegenden Erfindung, ein Wärmemanagement für einen Flugzeugantrieb zu verbessern, insbesondere einen verbesserten Flugzeugantrieb und ein verbessertes Verfahren zum Betreiben eines Flugzeugantriebs vorzuschlagen, mittels welchem eine verfügbare Wärmekapazität eines Brennstoffs für den Flugzeugantrieb verbessert genutzt werden kann. Dies wird erfindungsgemäß durch die Lehre der unabhängigen Ansprüche erreicht. Vorteilhafte Ausführungen der Erfindung sind Gegenstand der Unteransprüche.

Zur Lösung der Aufgabe wird ein Flugzeugantrieb vorgeschlagen, aufweisend ein Triebwerk, eine Brennstoffversorgungseinrichtung, eine Luftkühleinrichtung und eine Wärmetauscheinrichtung, wobei die Wärmetauscheinrichtung eingerichtet ist, thermische Energie zwischen einem Brennstoffstrom der Brennstoffversorgungseinrichtung und einem Luftstrom der Luftkühleinrichtung zu übertragen.

Durch den vorgeschlagenen Flugzeugantrieb kann ein Wärmeaustausch bzw. eine Energieübertragung zwischen der Brennstoffversorgungseinrichtung und der Luftkühleinrichtung ermöglicht werden. Hierdurch kann beispielsweise ein in der Brennstoffversorgungseinrichtung strömender Brennstoff als Wärmesenke für die Luftkühleinrichtung genutzt werden, wodurch eine Kühlleistung der Kühleinrichtung verbessert werden kann. Dies kann insbesondere in einem Betrieb des Flugzeugantriebs mit hohen Flugmachzahlen, niedriger Flughöhe und/ oder einem hohen Kraftstoff- bzw. Brennstoffdurchsatz in der bzw. durch die Brennstoffversorgungseinrichtung genutzt werden. Hierdurch kann beispielsweise eine Leistungsanforderung für die Luftkühleinrichtung verbessert erreicht werden.

Ferner kann mittels des vorgeschlagenen Flugantriebs bzw. der Wärmetauscheinrichtung Brennstoff mit in der Luftkühleinrichtung strömenden (kalten) Luft gekühlt werden, wodurch eine Einhaltung eines Temperaturlimits bzw. einer Temperaturobergrenze, insbesondere ohne Rückführung eines (aufgeheizten) Brennstoffs, ermöglicht werden kann. Dies kann insbesondere in hohen Flughöhen, bei niedrigen Brennstoffdurchsätzen in der Brennstoffversorgungseinrichtung und/ oder bei niedrigen Flugmachzahlen genutzt werden. Durch diese, insbesondere wechselweisen Effekte kann ein Auslegungspunkt der Luftkühleinrichtung und/ oder der Brennstoffversorgungseinrichtung derart beeinflusst werden, dass für eine Dimensionierung eines oder beider Systeme ähnliche bzw. gleiche Betriebspunkte herangezogen werden können. Hierdurch kann eine Ausnutzung einer Kühlleistung eines oder beider Systeme verbessert werden, wodurch Anforderungen für den jeweiligen Auslegungspunkt gesenkt werden können.

Der Flugzeugantrieb ist insbesondere zur Vortriebserzeugung für ein Flugzeug ausgebildet und kann als ein Mantelstromtriebwerk, insbesondere des 3-Strom-Typs, ausgebildet sein. Das Triebwerk weist einen Strömungskanal auf, in dem in einer Strömungsrichtung aufeinanderfolgend ein Verdichter, eine Brennkammer und eine Turbine angeordnet sind. Wenigstens ein Teil der von einem Fan angesaugten Umgebungsluft kann als Arbeitsfluid im Verdichter komprimiert werden. In der Brennkammer kann die komprimierte Luft bzw. das komprimierte Arbeitsfluid mit dem mittels der Brennstoffversorgungseinrichtung bereitgestellten Brennstoff vermischt und diese Mischung verbrannt werden, um Verbrennungsgase mit hohem Druck und hoher Temperatur zu erzeugen. Die Verbrennungsgase können von der Brennkammer zur Turbine strömen, wo sie sich ausdehnen können und dabei Arbeit verrichten. Zum Beispiel kann die Expansion der Verbrennungsgase in der Turbine bzw. einem Turbinenabschnitt eine Rotorwelle drehen, die beispielsweise mit einem Generator verbunden sein kann, um Elektrizität zu erzeugen. Im Anschluss an die Turbine können die Verbrennungsgase das Triebwerk über einen Abgasabschnitt verlassen.

Die Luftkühleinrichtung kann beispielsweise eine Kabinenluftaufbereitungseinrichtung und/ oder ein Air Cycle System (ACS) sein oder aufweisen, welche eingerichtet ist, eine Umgebungsluft, insbesondere einer Stauluftströmung (RAM Air) und/ oder einer Luftströmung wenigstens eines Strömungskanals des Flugzeugantriebs als Kühlluft zu verwenden. Dies kann insbesondere durch Verwendung der Kühlluft als Kühlfluid in wenigstens einer Luftwärmetauscheinrichtung, zur Abkühlung von einer zur Nutzung in einer Flugzeugkabine vorgesehenen Luft bzw. der Luftströmung in der Kabinenluftaufbereitungseinrichtung erfolgen.

Eine Temperaturobergrenze für den Brennstoff zur optimierten Verbrennung des Brennstoffs in dem Triebwerk bzw. der Brennkammer wird typischerweise nur im Auslegungspunkt erreicht. Der Auslegungspunkt ist insbesondere derjenige Betriebspunkt in dem hohe Wärmeeinträge von Flugzeugseite und Triebwerksseite sowie geringe Treibstoffdurchsätze kombiniert auftreten. In insbesondere allen weiteren Betriebspunkten wird eine verfügbare Wärmekapazität des Brennstoffs nicht vollumfänglich ausgenutzt, wodurch der Brennstoff kälter verbrannt wird.

Die Erfindung beruht unter anderem auf der Idee, die in bisher bekannten Anwendungen getrennt voneinander funktionierenden Systeme der Luftkühleinrichtung (Air Cycle System, ACM) und der Brennstoffversorgungseinrichtung thermisch miteinander in Verbindung zu bringen. Durch die Schaffung eines thermischen Übertragungsweges zwischen Luftkühleinrichtung und Brennstoffversorgungseinrichtung kann die Luftkühleinrichtung als Wärmesenke für die Brennstoffversorgungseinrichtung genutzt werden und umgekehrt. Hierdurch können die Anforderungen für die Auslegungspunkte beider Systeme bzw. Anlagen reduziert werden, weil eine Nutzung der Kühlleistung beider Systeme, insbesondere wechselseitig, verbessert werden kann.

Bei einer Ausführungsform ist die Brennstoffversorgungseinrichtung eingerichtet, einen Brennstoff zur Verbrennung in dem Triebwerk des Flugantriebs bereitzustellen. Hierbei ist die Brennstoffversorgungseinrichtung mit Brennstoff durchströmbar und kann wenigstens eine Brennstoffversorgungsleitung aufweisen, um den Brennstoff zum Verbrennen in dem Triebwerk bzw. der Brennkammer des Flugantriebs bereitstellen zu können.

Bei einer Ausführungsform weist die Brennstoffversorgungseinrichtung einen Tank, und nacheinander von dem Brennstoff durchströmbar wenigstens eine Pumpe, eine Steuerungseinrichtung und eine Brennstoffmesseinrichtung auf. Hierbei kann der Tank insbesondere (jeweils) auf einer Flugzeugseite angeordnet sein, wobei eine Systemgrenze zwischen Triebwerk und Flugzeug nicht festgelegt ist, sodass in einigen Ausführungsformen Komponenten der Brennstoffversorgungseinrichtung und/ oder der Luftkühleinrichtung dem Flugzeug oder dem Triebwerk zugeordnet sein können.

Der Tank kann hierbei beispielsweise als Flügeltank, externer Tank oder Ähnliches ausgestaltet sein. Die einzelnen Komponenten der Brennstoffversorgungseinrichtung können mittels einer oder mehrerer Brennstoffversorgungsleitung(en) verbunden sein. Eine erste Pumpe kann eingerichtet sein, die Brennstoffversorgungseinrichtung mit Brennstoff in Form einer Brennstoffströmung aus dem Tank zu versorgen. Stromab einer solchen ersten Pumpe können Wärmelasten des Flugzeugs, insbesondere flugzeugsseitig, an die Brennstoffströmung abgegeben werden. Dies kann beispielsweise mittels direkter Wärmeübertragung und/ oder Wärmepumpen beispielsweise in Form von Dampfkreisläufen (Vapor Cycles) erfolgen. Eine Position und/ oder Architektur einer solchen Wärmeübertragung auf die Brennstoffströmung kann variieren. Zudem kann die Brennstoffversorgungseinrichtung beispielsweise einen, insbesondere geschlossenen, Rücklauf zum Tank und/ oder Bypassleitungen beispielsweise zu zusätzlichen Wärmetauscheinrichtungen aufweisen. Zudem können Wärmelasten des Triebwerks bzw. des Flugzeugantriebs auf die Brennstoffströmung übertragen werden. Auch diese Wärmelasten können mittels direkter Wärmeübertragung und/ oder Wärmepumpen an die Brennstoffströmung abgegeben werden, wobei eine Ausbildung und Verortung der Wärmeübertragung variieren kann.

Typischerweise ist eine bzw. die Brennstoffversorgungsleitung vor einer Steuereinrichtung, die insbesondere in Form einer Full Authority Digital Engine Control (FADEC) ausgeprägt ist, geteilt, um geringe bzw. minimierte Brennstofftemperaturen zur Kühlung von elektronischen Komponenten der FADEC bereitstellen zu können. In Strömungsrichtung der Brennstoffströmung kann diese zu einer weiteren Pumpe (Second Stage Pump (SSP)) strömen und mittels der nachfolgend angeordneten Brennstoffmesseinrichtung (Fuel Metering Unit (FMU)) können eine Temperatur, eine Strömungsgeschwindigkeit und/ oder ein Massenstrom der Brennstoffströmung bzw. des Brennstoffstroms erfasst werden. Auch in diesem Bereich der Brennstoffversorgungseinrichtung können Rückführ- und/ oder Bypassleitungen der bereits beschriebenen Art vorgesehen sein.

Bei einer Ausführungsform weist die Luftkühleinrichtung wenigstens eine erste Luftwärmetauscheinrichtung auf, die eingerichtet ist, eine Zapfluft des Triebwerks zu kühlen und weist eine zweite Luftwärmetauscheinrichtung auf, die eingerichtet ist, die mittels eines Verdichters der Luftkühleinrichtung verdichtete Zapfluft als Luftstrom bzw. Luftströmung der Luftkühleinrichtung zu kühlen. Beispielsweise zur Versorgung einer Flugzeugkabine mit Luft, kann dem Triebwerk Zapfluft, insbesondere in einem Bereich des Verdichters, entnommen werden. Um diese Zapfluft auf eine für die Nutzung in der Kabine geeignete Temperatur zu kühlen, kann die Zapfluft mittels der Luftkühleinrichtung bzw. deren erster Luftwärmetauscheinrichtung gekühlt bzw. vorgekühlt werden. Die Zapfluft kann hierbei an einem Hochdruckverdichter des Verdichters entnommen werden, wobei eine Entnahme von Zapfluft insbesondere nicht auf diese Position beschränkt ist, sondern beispielsweise auch mittels einer oder mehrerer Anzapfungen verschiedener Bereiche des Triebwerks, insbesondere einschließlich einem Fanbereich sowie wenigstens einem Bypass, erfolgen kann.

Bei einer Ausführungsform ist die erste Luftwärmetauscheinrichtung und/ oder die zweite Luftwärmetauscheinrichtung in wenigstens einem Nebenstromkanal des Flugzeugantriebs angeordnet. Dabei weist der Flugzeugantrieb wenigstens einen wenigstens teilweise das Triebwerk umgebenden Nebenstromkanal auf. Am Einlass des Flugzeugantriebs kann mittels wenigstens eines Fans Umgebungsluft eingesaugt werden, wobei eine Kernluftströmung als Arbeitsfluid in dem Triebwerk strömen kann und die wenigstens eine Nebenluftströmung in dem jeweiligen Nebenstromkanal am Triebwerk vorbeigeleitet und aus dem Flugzeugantrieb in Strömungsrichtung hinten ausgestoßen werden kann. Der Nebenstromkanal kann dabei insbesondere als radial außen zu einem Kerntriebwerk des Triebwerks angeordnete Kreisringsektion ausgebildet sein, wobei diesem angesaugte Luft hinter wenigstens einer Niederdruckverdichterstufe zugeführt werden kann.

Bei einer Ausführungsform weist die Wärmetauscheinrichtung wenigstens ein in der Brennstoffversorgungseinrichtung angeordnetes Brennstoffbypassventil auf, welches in Abhängigkeit einer Brennstofftemperatur schaltbar ist. Mittels des Brennstoffbypassventils kann die Brennstoffströmung wenigstens teilweise insbesondere einem Wärmetauscher der Wärmetauscheinrichtung zugeführt werden, um mit der Luftströmung in thermische Wechselwirkung zu treten. Hierbei kann der Wärmetauscher beispielsweise in, an oder beabstandet zu einer Brennstoffversorgungsleitung angeordnet sein und kann als ein luftgekühlter Brennstoffkühler oder als ein brennstoffgekühlter Luftkühler ausgebildet sein.

Bei einer Ausführungsform weist die Wärmetauscheinrichtung wenigstens ein in der Luftkühleinrichtung angeordnetes Luftbypassventil auf, welches in Abhängigkeit der Brennstofftemperatur schaltbar ist. Mittels des Luftbypassventils kann die Luftströmung wenigstens teilweise zu dem Wärmetauscher der Wärmetauscheinrichtung geführt werden, um mit der Brennstoffströmung thermische Energie auszutauschen. In einigen Ausführungsformen kann vorgesehen sein, dass der Wärmetauscher in der Brennstoffversorgungsleitung integriert und von der Brennstoffströmung durchströmbar ist bzw. durchströmt wird, wobei lediglich die Luftströmung mittels des Luftbypassventils zuschaltbar ist bzw. zugeschaltet werden kann.

Die Brennstofftemperatur wird hierbei insbesondere durch die Brennstoffmesseinrichtung der Brennstoffversorgungseinrichtung bestimmt und/ oder kann eine insbesondere maximal zulässige Temperatur des Kraftstoffs beim Eintritt in die Brennkammer oder beim Übertritt der Systemgrenze zwischen Flugzeug und Flugzeugantrieb sein.

Insbesondere sind mittels der Bypassventile zwei Schaltszenarien darstellbar: In einer ersten Schaltstellung kann die Brennstoffströmung als Wärmesenke für die Luftkühleinrichtung genutzt werden, wobei sich die Brennstoffströmung erwärmen kann. Diese erste Schaltstellung ist insbesondere für einen Fall anwendbar, bei welchem die Brennstoffströmung eine Temperatur unterhalb der erlaubten Höchsttemperatur des Brennstoffstroms, insbesondere beim Eintritt in die Brennstoffkammer, aufweist.

In einer zweiten Schaltstellung kann die Luftströmung der Luftkühleinrichtung die Brennstoffströmung kühlen, um beispielsweise einen zusätzlichen Temperatureintrag für eine Wärmelast des Triebwerks bzw. des Flugzeugantriebs zu erlauben. Diese zweite Schaltstellung ist insbesondere für einen Fall anwendbar, bei welchem eine Temperatur der Brennstoffströmung, insbesondere beim Systemgrenzenübertritt zwischen Flugzeug und Flugzeugantrieb bereits nahe an der maximal erlaubten Temperatur für einen Eintritt in die Brennkammer oder die Triebwerksseite des Flugzeugs aufweist.

Bei einer Ausführungsform ist das wenigstens eine Brennstoffbypassventil in Strömungsrichtung des Brennstoffstroms vor einer Ölkühleinrichtung der Brennstoffversorgungseinrichtung und/ oder vor der Steuerungseinrichtung und/ oder nach der Brennstoffmesseinrichtung und/ oder nach einer der Brennstoffmesseinrichtung angeordneten, insbesondere zweiten Pumpe angeordnet.

Die Ölkühleinrichtung (Fuel Cooled Engine Oil Cooler (FCEOC)) ist insbesondere dazu eingerichtet, eine Wärme des Triebwerks bzw. des Flugantriebs an die Brennstoffströmung abzugeben. Ist das Brennstoffbypassventil nun vor der insbesondere triebwerksseitig bzw. flugzeugantriebsseitig angeordneten Ölkühleinrichtung angeordnet und geschaltet, kann im sinne der oben beschriebenen zweiten Schaltposition eine Kühlung des Brennstoffstroms mittels der Luftströmung der Luftkühleinrichtung erfolgen.

Bei einer Anordnung des Brennstoffbypassventils vor der Steuerungseinrichtung kann vorgesehen sein, dass eine Teilung der Brennstoffversorgungsleitung in einen ersten Pfad zur Steuerungseinrichtung und einen zweiten Pfad zur Ölkühleinrichtung bzw. Wärmelastaufnahme der Triebwerksseite in Strömungsrichtung nach dem Brennstoffbypassventil bzw. dem Wärmetausch zur Kühlung des Brennstoffs erfolgt bzw. vorgesehen ist.

Eine Anordnung des Brennstoffbypassventils nach der Brennstoffmesseinrichtung und/ oder nach einer nach der Brennstoffmesseinrichtung angeordneten zweiten Pumpe ist insbesondere für Anwendungen der oben beschriebenen ersten Schaltposition vorgesehen, bei welchen die Brennstoffströmung als Wärmesenke der Luftkühleinrichtung dient, um den Brennstoff insbesondere auf eine vorgesehene Maximaltemperatur zu erhitzen.

Bei einer Ausführungsform ist das wenigstens eine Luftbypassventil in Strömungsrichtung des Luftstroms nach der zweiten Luftwärmetauscheinrichtung und/ oder nach einer ersten oder einer zweiten Kühlturbine der Luftkühleinrichtung angeordnet.

Die zweite Luftwärmetauscheinrichtung ist insbesondere eingerichtet, beispielsweise die mittels eines Air Cycle Systems (ACS) der Luftkühleinrichtung verdichtete Zapfluft zu kühlen. Die Luftkühleinrichtung kann dabei einen ACS-Verdichter, wenigstens eine Kühlturbine bzw. ACS-Turbine sowie einen ACS-Generator aufweisen. Der ACS-Verdichter kann die zugeführte Zapfluft verdichten, womit eine Erwärmung der Zapfluft einhergeht. Diese verdichtete bzw. erwärmte Zapfluft kann als Luftstrom bzw. Luftströmung die zweite Luftwärmetauscheinrichtung durchlaufen und mittels dieser gekühlt werden. Dieser gekühlte, verdichtete Zapfluftstrom kann danach insbesondere die erste Kühlturbine bzw. ACS-Turbine und die zweite Kühlturbine bzw. ACS-Turbine durchlaufen, sodass die Luftströmung expandieren und weiter abkühlen kann. Hierbei kann eine Rotationsenergie der ACS-Turbine bzw. Kühlturbine genutzt werden, um den ACS-Generator beispielsweise über eine Welle anzutreiben und elektrische Energie zu liefern.

Durch die Anordnung des Luftbypassventils nach der zweiten Luftwärmetauscheinrichtung, kann die Luftströmung zum Erwärmen des Brennstoffs, insbesondere im Sinne der oben beschriebenen ersten Schaltposition, genutzt werden. Ist das Luftbypassventil nach der ersten oder der zweiten Kühlturbine der Luftkühleinrichtung angeordnet, kann die Luftströmung als Wärmesenke zum Kühlen des Brennstoffs, insbesondere im Sinne der oben beschriebenen zweiten Schaltposition, genutzt werden.

Gemäß einem weiteren Aspekt wird ein Verfahren zum Betreiben eines Flugzeugantriebs, insbesondere eines hierin beschriebenen Flugantriebs, aufweisend ein Triebwerk, eine Brennstoffversorgungseinrichtung, eine Luftkühleinrichtung und wenigstens eine Wärmetauscheinrichtung vorgeschlagen. Das Verfahren weist dabei Schritte des Durchströmens der Brennstoffversorgungseinrichtung mit Brennstoff zum Verbrennen in dem Triebwerk des Flugantriebs, des Durchströmens der Luftkühleinrichtung mit Luft, und des Übertragens von thermischer Energie zwischen dem Brennstoff und der Luft mittels der wenigstens einen Wärmetauscheinrichtung, auf.

Beim Durchströmen der Brennstoffversorgungseinrichtung mit Brennstoff wird eine Brennstoffströmung bzw. ein Brennstoffstrom insbesondere mittels wenigstens einer Pumpe aus einem Tank zu einer Brennkammer des Triebwerks des Flugzeugantriebs befördert, um dort verbrannt zu werden und Energie zur Vortriebserzeugung freizusetzen. Hierbei können Komponenten der Brennstoffversorgungseinrichtung mittels einer oder mehrerer Brennstoffversorgungsleitung(en) verbunden sein und/ oder nacheinander von dem Brennstoff durchströmt werden.

Die Luftkühleinrichtung kann beispielsweise eine Luftaufbereitungseinrichtung zur Bereitstellung von Luft, insbesondere aus dem Triebwerk und/ oder Flugzeugantrieb entnommenen Zapfluft, in einer Flugzeugkabine sein. Dabei kann die Luftkühleinrichtung eine oder mehrere Luftwärmetauscheinrichtung(en) aufweisen, die nacheinander von der Luftströmung durchströmbar sind, um die Luftströmung zu kühlen.

Die Wärmetauscheinrichtung ist insbesondere eingerichtet, die Brennstoffströmung und die Luftströmung derart in thermischen Austausch zu bringen, dass Wärme von einem der Stoffströme an den anderen übertragbar ist bzw. übertragen werden kann. Hierzu kann ein Wärmetauscher der Wärmetauscheinrichtung in oder beabstandet zu der Brennstoffversorgungseinrichtung angeordnet sein, wobei die Strömungen mittels schaltbarer Zu- und/ oder Ableitungen bzw. Strömungsbypassen dem Wärmetauscher zur Energieübertragung zugeführt und/ oder in das jeweilige Strömungssystem zurückgeführt werden können.

Bei einer Ausführungsform weist die Wärmetauscheinrichtung wenigstens ein in der Brennstoffversorgungseinrichtung angeordnetes Brennstoffbypassventil und wenigstens ein in der Luftkühleinrichtung angeordnetes Luftbypassventil auf, welche in Abhängigkeit einer Brennstofftemperatur, insbesondere wechselweise, schaltbar sind bzw. diese wenigstens zwei Bypassventile in Abhängigkeit einer Brennstofftemperatur geschaltet werden. Hierdurch können die oben beschriebenen Schaltszenarien bzw. Schaltstellungen implementiert werden, um eine brennstofftemperaturabhängige Kühlung und/ oder Erhitzung des Brennstoffs zu ermöglichen.

Weitere Merkmale, Vorteile und Anwendungsmöglichkeiten der Erfindung ergeben sich aus der nachfolgenden Beschreibung im Zusammenhang mit den Figuren. Im Allgemeinen gilt, dass Merkmale der verschiedenen hierin beschriebenen beispielhaften Aspekte und/oder Ausführungsformen insbesondere der Vorrichtung und des Verfahrens miteinander kombiniert werden können, sofern dies im Zusammenhang mit der Offenbarung nicht eindeutig ausgeschlossen ist.

Im folgenden Teil der Beschreibung wird auf die Figuren Bezug genommen, die zur Veranschaulichung spezifischer Aspekte und Ausführungsformen der vorliegenden Erfindung gezeigt sind. Es versteht sich, dass andere Aspekte verwendet werden können und strukturelle oder logische Änderungen der illustrierten Ausführungsformen möglich sind, ohne den Umfang der vorliegenden Erfindung zu verlassen. Die folgende Beschreibung der Figuren ist daher nicht einschränkend zu verstehen. Es zeigt
- Fig. 1: eine schematische Darstellung eines beispielhaften erfindungsgemäßen Flugzeugantriebs;
- Fig. 2: eine weitere schematische Darstellung eines beispielhaften erfindungsgemäßen Flugzeugantriebs; und
- Fig. 3: ein Ablaufdiagramm eines beispielhaften erfindungsgemäßen Verfahrens zum Betreiben eines Flugzeugantriebs.

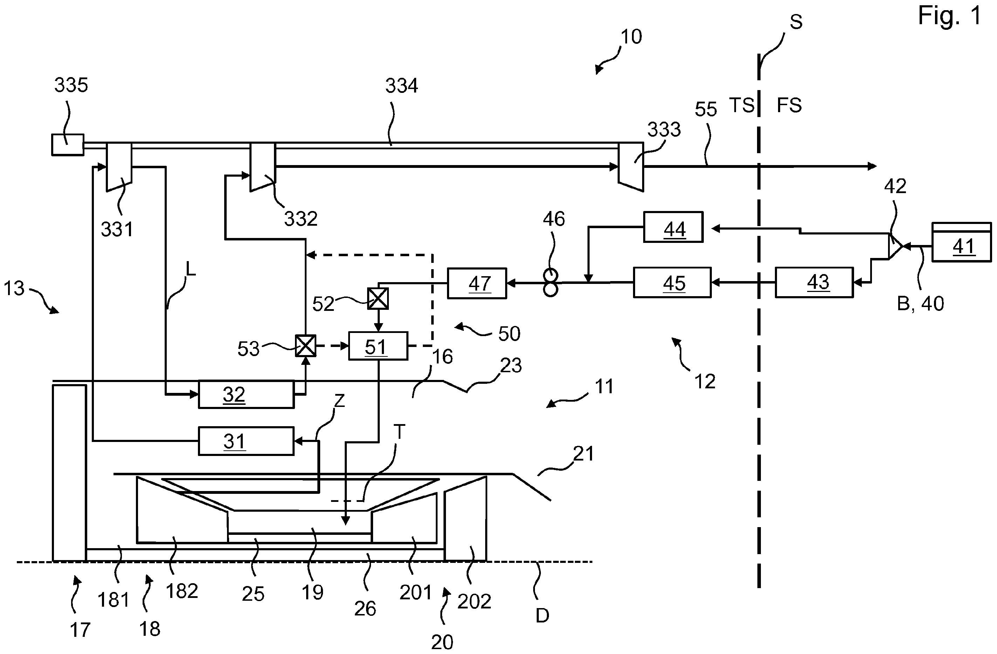

**Fig. 1** zeigt eine beispielhafte Darstellung eines Ausführungsbeispiels eines erfindungsgemäßen Flugzeugantriebs 10 aufweisend ein Triebwerk 11, eine Brennstoffversorgungseinrichtung 12, eine Luftkühleinrichtung 13 und eine Wärmetauscheinrichtung 50 in einer schematischen Ansicht. Die Darstellung der Fig 1 illustriert eine Systemgrenze S zwischen einer Flugzeugseite FS und einer Triebwerksseite TS. Diese ist nicht festgelegt und kann je nach Ausführungsbeispiel variieren.

Der Flugzeugantrieb 10 des dargestellten Ausführungsbeispiels ist dreiströmig ausgebildet. Ausgehend von einer Triebwerksdrehachse D in radialer Richtung weist der Flugzeugantrieb 10 das Triebwerk 11, einen Nebenstromkanal 16 auf. Bei der beispielhaften Ausführungsform ist der äußere Nebenstromkanal 16 eingerichtet, Kühlluft als Kühlfluid für die Luftkühleinrichtung 13 bereitzustellen. Alternativ ist eine Kühlung der Wärmetauscher mittels Umgebungsluft möglich.

Entlang der Triebwerksdrehachse D weist das Triebwerk 11 in Strömungsrichtung hintereinander angeordnet einen Fan 17, einen Verdichter 18, eine Brennkammer 19 und eine Turbine 20 sowie einen Auslassabschnitt 21 auf. Das Triebwerk 11 ist eingerichtet, mittels des Fans 17 angesaugte Umgebungsluft zu beschleunigen.

Der Verdichter 18 weist dabei in Strömungsrichtung aufeinanderfolgend angeordnet, einen Niederdruckverdichter 181 und einen Hochdruckverdichter 182 auf. Die Turbine 20 weist in Strömungsrichtung aufeinanderfolgend angeordnet eine Hochdruckturbine 201 und eine Niederdruckturbine 202 auf. Der Niederdruckverdichter 181 verdichtet den in das Triebwerk 11 eintretenden Arbeitsluftstrom, bevor er in den Hochdruckverdichter 182 gelangt, in welchem eine weitere Verdichtung des Arbeitsluftstroms erfolgt. Diese verdichtete Arbeitsluftströmung, die aus dem Hochdruckverdichter 182 austritt, kann in die Brennkammer 19 geführt werden, wo sie mit Brennstoff, welcher mittels der Brennstoffversorgungseinrichtung 12 bereitgestellt wird, vermischt und zur Verbrennung gebracht wird. Die heißen Verbrennungsgase werden in der Hochdruckturbine 201 und in der Niederdruckturbine 202 entspannt, bevor sie durch den Abgasabschnitt 21 austreten können. Dabei können die Hochdruckturbine 201 und die Niederdruckturbine 202 über Wellenvorrichtungen 25, 26 jeweils den Hochdruckverdichter 182 bzw. den Niederdruckverdichter 181 antreiben. Bei anderen Ausführungsbeispielen können andere Wellensysteme ausgebildet sein und/ oder eine Trennung des Hochdrucksystems in ein Mitteldruck- und ein Hochdrucksystem mit separaten Wellen ausgebildet sein.

In dem dargestellten Ausführungsbeispiel wird im Bereich des Hochdruckverdichters 182 Zapfluft Z entnommen, um diese Zapfluft Z nach Durchlaufen der Luftkühleinrichtung 13 an der Flugzeugseite FS zur Verfügung zu stellen und beispielsweise in eine Flugzeugkabine zu leiten.

In anderen Ausführungsformen kann die Entnahme von Zapfluft Z auch an anderen Stellen des Triebwerks 11 und/ oder dem Bypass 16 erfolgen. Insbesondere kann ein Massenstrom und/ oder ein Druck der Zapfluft Z mittels geeigneter Stelleinrichtungen, insbesondere im Bereich von Anzapfstellen, einstellbar sein.

Die Luftkühleinrichtung 13 weist eine erste Luftwärmetauscheinrichtung 31 auf, die eingerichtet ist, die Zapfluft Z des Triebwerks 11 zu kühlen bzw. Kühlluft des äußeren Nebenstromkanals 16 zur Kühlung der Zapfluft Z zu nutzen. Hierzu ist die erste Luftwärmetauscheinrichtung 31 in dem äußeren Nebenstromkanal 16 angeordnet, wobei die Zapfluft Z die erste Luftwärmetauscheinrichtung 31 durchläuft und dabei Energie bzw. Wärme an die Kühlluft des äußeren Nebenstromkanals 16 abgeben kann.

Die so vorgekühlte Zapfluft Z kann einen ACS-Verdichter 331, eine erste ACS-Turbine bzw. Kühlturbine 332, eine zweite ACS-Turbine bzw. Kühlturbine 333 sowie eine zweite Luftwärmetauscheinrichtung 32 der Luftkühleinrichtung 13 durchströmen. Der ACS-Verdichter 331 kann die zugeführte Zapfluft Z bzw. Luftströmung L verdichten, womit eine Erwärmung der Zapfluft Z einhergeht. Diese verdichtete bzw. erwärmte Zapfluft Z bzw. Luftströmung L kann die zweite Luftwärmetauscheinrichtung 32 durchlaufen, wobei die zweite Luftwärmetauscheinrichtung 32 eingerichtet ist, Kühlluft des äußeren Nebenstromkanals 16 zur Kühlung dieser verdichteten Zapfluft Z bzw. Luftströmung L zu nutzen. Hierzu ist die zweite Luftwärmetauscheinrichtung 32 in dem äußeren Nebenstromkanal 16 angeordnet, wobei die Zapfluft Z bzw. Luftströmung L die zweite Luftwärmetauscheinrichtung 32 durchläuft und dabei Energie bzw. Wärme an die Kühlluft des äußeren Nebenstromkanals 16 abgeben kann.

Dieser gekühlte Luftstrom L kann danach die erste ACS-Turbine 332 und die zweite ACS-Turbine 333 durchlaufen, sodass der Luftstrom L expandieren und weiter abkühlen kann. Dabei kann eine Rotationsenergie der ACS-Turbinen 332, 333 genutzt werden, um beispielsweise über eine ACS-Welle 334 einen ASC-Generator 335 anzutreiben und elektrische Energie zu liefern und/ oder den ACS-Verdichter 331 anzutreiben. Der mittels der ACS-Turbinen 332, 333 gekühlte Luftstrom L kann über eine Zuleitung 55 an der Flugzeugseite FS bereit gestellt werden.

Die Brennstoffversorgungseinrichtung 12 ist eingerichtet, einen Brennstoff B zur Verbrennung in dem Triebwerk 11 des Flugantriebs 10 bereitzustellen. Hierzu weist die Brennstoffversorgungseinrichtung einen Tank 41, und nacheinander von dem Brennstoffstrom durchströmbar wenigstens eine erste Pumpe 42, eine Steuerungseinrichtung 44 und eine Brennstoffmesseinrichtung 47 auf. Hierbei kann der Tank 41 auf der Flugzeugseite FS angeordnet sein. Die erste Pumpe 42 ist eingerichtet, die Brennstoffversorgungseinrichtung 12 mit Brennstoff aus dem Tank 41 zu versorgen, wobei die Komponenten der Brennstoffversorgungseinrichtung 12 mittels wenigstens einer Brennstoffversorgungsleitung 40 verbunden sind. Stromab der ersten Pumpe 42 ist eine Wärmeübertragungseinrichtung 43 angeordnet, mittels welcher Wärmelasten der Flugzeugseite FS des Flugzeugs an die Brennstoffströmung B abgegeben werden können. Die Brennstoffversorgungseinrichtung 12 kann wenigstens einen (hier nicht dargestellten), insbesondere geschlossenen, Rücklauf zum Tank 41 und/ oder (nicht dargestellte) Bypassleitungen, beispielsweise zu und von zusätzlichen Wärmetauscheinrichtungen aufweisen.

Die Brennstoffversorgungsleitung 40 kann in Strömungsrichtung vor der Steuereinrichtung 44, beispielsweise einer Full Authority Digital Engine Control (FADEC), in einen ersten und einen zweiten Pfad geteilt sein, um in dem ersten Pfad reduzierte Brennstofftemperaturen an der FADEC bereitstellen zu können. In einem zweiten Pfad der Brennstoffversorgungsleitung 40 kann eine Ölkühleinrichtung 45, beispielsweise ein Fuel Cooled Engine Oil Cooler (FCEOC), angeordnet sein, um Wärmelasten des Triebwerks 11 bzw. der Flugzeugantriebsseite TS auf die Brennstoffströmung B zu übertragen. Vor einer zweiten Pumpe 46 können die beiden Strömungspfade zusammengeführt werden. Mittels einer in Strömungsrichtung nachfolgend angeordneten Brennstoffmesseinrichtung 47 (Fuel Metering Unit (FMU)) können eine Temperatur, eine Strömungsgeschwindigkeit erfasst und/ oder ein Massenstrom der Brennstoffströmung B eingestellt werden. Auch in diesem Bereich der Brennstoffversorgungseinrichtung können (nicht dargestellte) Rückführ- und/ oder Bypassleitungen vorgesehen sein.

In dem dargestellten Ausführungsbeispiel ist die Wärmetauscheinrichtung 50 in einer ersten Schaltstellung dargestellt und weist wenigstens ein in der Brennstoffversorgungseinrichtung 12 angeordnetes Brennstoffbypassventil 52 auf, wobei dieses Brennstoffbypassventil 52 nach der Brennstoffmesseinrichtung 47 angeordnet ist und in Abhängigkeit einer Brennstofftemperatur T schaltbar ist. Von dort wird die Brennstoffströmung B mittels der Brennstoffversorgungseinrichtung 12 zur Verbrennung in die Brennkammer 19 geführt. Zudem weist die Wärmetauscheinrichtung 50 ein in der Luftkühleinrichtung 13 angeordnetes Luftbypassventil 53 auf, welches nach der zweiten Luftwärmetauscheinrichtung 32 in der Luftkühleinrichtung 13 angeordnet ist und ebenfalls in Abhängigkeit der Brennstofftemperatur T schaltbar ist. Mittels der beiden Bypassventile 52, 53 können die Strömungen B, L beispielsweise einem Wärmetauscher 51 der Wärmetauscheinrichtung 50 zugeführt werden. Dabei kann der Wärmetauscher 51 beispielsweise eigerichtet sein, mittels direkter Wärmeübertragung und/ oder Wärmepumpen thermische Energie zwischen der Luftströmung L und der Brennstoffströmung B zu übertragen.

Hierbei kann die Brennstofftemperatur T beispielsweise an einem Eintritt in die Brennkammer 19 bestimmt werden. Wird hierbei festgestellt, dass die Brennstoffströmung B eine Temperatur unterhalb der erlaubten Höchsttemperatur des Brennstoffstroms B zum Verbrennen in der Brennstoffkammer 19 aufweist, kann durch die oben beschriebene Konfiguration die erste Schaltstellung dargestellt werden, in welcher die Brennstoffströmung B als Wärmesenke für die Luftkühleinrichtung 13 genutzt wird, um die Brennstoffströmung B insbesondere auf die erlaubte Höchsttemperatur zu erhitzen.

Bei einem anderen Ausführungsbeispiel kann, zum Erzielen der ersten Schaltstellung, das Brennstoffbypassventil 52 zwischen der zweiten Pumpe 46 und der Brennstoffmesseinrichtung 47 angeordnet sein, um eine Übertragung von Wärme von der Luftströmung L auf die Brennstoffströmung B zu erzielen.

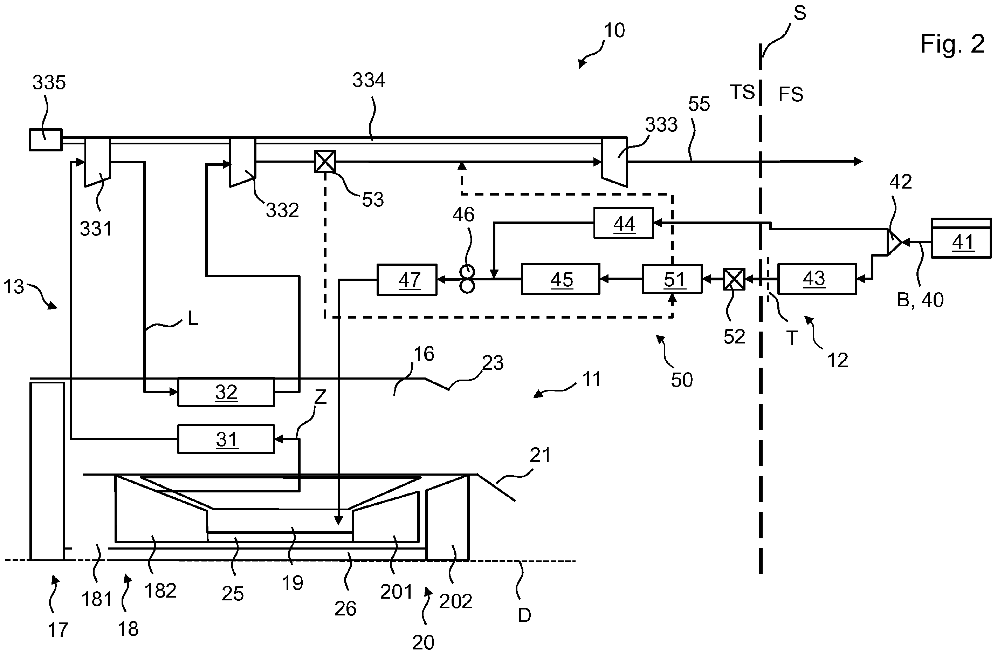

**Fig. 2** zeigt eine weitere beispielhafte Darstellung eines Ausführungsbeispiels eines erfindungsgemäßen Flugzeugantriebs 10 aufweisend ein Triebwerk 11, eine Brennstoffversorgungseinrichtung 12, eine Luftkühleinrichtung 13 und eine Wärmetauscheinrichtung 50 in einer schematischen Ansicht. Hierbei ist die Wärmetauscheinrichtung 50 in einer zweiten Schaltstellung illustriert. Der Flugzeugantrieb 10 entspricht in seinem Aufbau weitgehend dem in Fig. 1 illustrierten Ausführungsbeispiel. Im Folgenden wird daher im Wesentlichen nur auf die Unterschiede der beiden Ausführungsbeispiele eingegangen.

In dem in Fig. 2 dargestellten Ausführungsbeispiel weist die Wärmetauscheinrichtung 50 wenigstens ein in der Brennstoffversorgungseinrichtung 12 angeordnetes Brennstoffbypassventil 52 auf, wobei dieses Brennstoffbypassventil 52 vor der Ölkühleinrichtung 45 der Brennstoffversorgungseinrichtung 12 angeordnet ist und in Abhängigkeit einer Brennstofftemperatur T schaltbar ist. Von dort wird die Brennstoffströmung B mittels der Brennstoffversorgungseinrichtung 12 über die zweite Pumpe 46 und die Brennstoffmesseinrichtung 47 zur Verbrennung in die Brennkammer 19 des Triebwerks 11 geführt.

Zudem weist die Wärmetauscheinrichtung 50 ein in der Luftkühleinrichtung 13 angeordnetes Luftbypassventil 53 auf, welches nach der ersten Kühlturbine 332 in der Luftkühleinrichtung 13 angeordnet ist und ebenfalls in Abhängigkeit der Brennstofftemperatur T schaltbar ist. Die Brennstofftemperatur T kann hierbei an der Systemgrenze S bestimmt werden. Wird hierbei festgestellt, dass die Brennstoffströmung B eine Temperatur aufweist, die bereits nahe an der maximal erlaubten Temperatur für einen Eintritt in die Brennkammer 19 und/ oder die Triebwerksseite TS aufweist, kann in der zweiten Schaltstellung die Luftströmung L der Luftkühleinrichtung 13 die Brennstoffströmung B kühlen, um beispielsweise einen zusätzlichen Temperatureintrag für eine Wärmelast des Triebwerks 11 bzw. des Flugzeugantriebs 10, insbesondere mittels der Ölkühleinrichtung 45 zu erlauben.

In einem anderen Ausführungsbeispiel kann zur Erzielung der zweiten Schaltstellung das Brennstoffbypassventil 52 vor der Steuerungseinrichtung 44 bzw. einer Pfadtrennung in einer Brennstoffversorgungsleitung 40 zwischen der Steuerungseinrichtung 44 und der Ölkühleinrichtung 45 angeordnet sein. Zudem kann das Luftbypassventil 53 nach einer zweiten Kühlturbine 333 oder zwischen der ersten Kühlturbine 332 und der zweiten Kühlturbine 333 angeordnet sein.

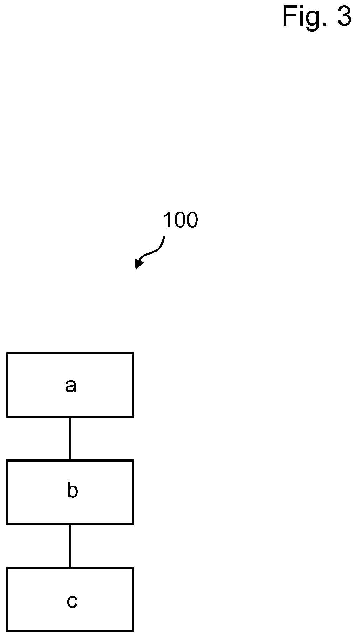

**Fig. 3** zeigt ein Ablaufdiagramm eines beispielhaften erfindungsgemäßen Verfahrens 100 zum Betreiben eines Flugzeugantriebs 10, insbesondere eines hierin beschriebenen Flugzeugantriebs 10. Der Flugzeugantrieb 10 weist ein Triebwerk 11, eine Brennstoffversorgungseinrichtung 12, eine Luftkühleinrichtung 13 und wenigstens eine Wärmetauscheinrichtung 50 auf.

In einem Schritt a wird die Brennstoffversorgungseinrichtung 12 mit Brennstoff B zum Verbrennen in dem Triebwerk 11 bzw. einer Brennkammer 19 des Flugantriebs 10 durchströmt. In einem Schritt b wird die Luftkühleinrichtung 13 mit Luft L durchströmt. Hierbei kann beispielsweise Zapfluft Z aus dem Triebwerk 11 entnommen und mittels wenigstens einer Luftwärmetauscheinrichtung 31, 32 der Luftkühleinrichtung 13 gekühlt werden.

In einem weiteren Schritt c wird thermische Energie zwischen dem Brennstoff B und der Luft L mittels der wenigstens einen Wärmetauscheinrichtung 50 übertragen. Hierzu kann die Wärmetauscheinrichtung 50 wenigstens ein in der Brennstoffversorgungseinrichtung 13 angeordnetes Brennstoffbypassventil 52 und wenigstens ein in der Luftkühleinrichtung 12 angeordnetes Luftbypassventil 53 aufweisen, wobei diese wenigstens zwei Bypassventile 52, 53 in Abhängigkeit einer Brennstofftemperatur T geschaltet werden können bzw. schaltbar sind.

Die Brennstofftemperatur T kann beispielsweise an einem Eintritt in die Brennkammer 19 und oder an einem Übertritt einer Systemgrenze S zwischen einer Flugzeugseite FS und einer Triebwerksseite TS und/ oder vor einer Ölkühleinrichtung 45 der Brennstoffversorgungseinrichtung 13 erfasst und/ oder überwacht werden.

Weist der Brennstoff B beim Eintritt in die Brennkammer 19 eine Temperatur unterhalb einer erlaubten Höchsttemperatur auf, so kann die Wärmetauscheinrichtung 50 in eine erste Schaltstellung versetzt werden, um den Brennstoff B zu erhitzen. Hierbei kann, insbesondere in der ersten Schaltstellung der Wärmetauscheinrichtung 50, das Brennstoffbypassventil 52 nach einer Brennstoffmesseinrichtung 47 der Brennstoffversorgungseinrichtung 12 oder nach einer vor einer Brennstoffmesseinrichtung 47 der Brennstoffversorgungseinrichtung 12 angeordneten zweiten Pumpe 46 angeordnet sein. Das Luftbypassventil 53 ist insbesondere nach einer zweiten Luftwärmetauscheinrichtung 32 der oben beschriebenen Luftkühleinrichtung 13 angeordnet.

Weist der Brennstoff B an oder vor der Ölkühleinrichtung 45 oder beim Übertritt auf die Triebwerksseite TS eine Temperatur auf, die nahe an der erlaubten Höchsttemperatur ist, so kann die Wärmetauscheinrichtung 50 in eine zweite Schaltstellung versetzt werden, um den Brennstoff B zu kühlen und somit zusätzlichen Wärmeeintrag durch die Ölkühleinrichtung 45 zu erlauben. In der zweiten Schaltstellung der Wärmetauscheinrichtung 50 kann das Brennstoffbypassventil 52 vor einer Ölkühleinrichtung 45 der Brennstoffversorgungseinrichtung 12 oder vor der Steuerungseinrichtung 44 angeordnet und/ oder geschaltet sein. Das Luftbypassventil kann hierbei nach einer ersten Kühlturbine 332 oder nach einer zweiten Kühlturbine 333 der oben beschriebenen Luftkühleinrichtung 13 angeordnet sein.

### BEZUGSZEICHENLISTE

- 10: Flugzeugantrieb
- 11: Triebwerk
- 12: Brennstoffversorgungseinrichtung
- 13: Luftkühleinrichtung
- 16: äußerer Nebenstromkanal (zweiter Bypass)
- 17: Fan
- 18: Verdichter
- 19: Brennkammer
- 20: Turbine
- 21: Abgasabschnitt
- 23: Bypassauslass
- 25, 26: Wellenvorrichtungen
- 31: erste Luftwärmetauscheinrichtung
- 32: zweite Luftwärmetauscheinrichtung
- 40: Brennstoffversorgungsleitung
- 41: Tank
- 42: erste Pumpe
- 43: Wärmeübertragungseinrichtung Flugzeugseite
- 44: Steuereinrichtung
- 45: Ölkühleinrichtung
- 46: zweite Pumpe
- 47: Brennstoffmesseinrichtung
- 50: Wärmetauscheinrichtung
- 51: Wärmetauscher
- 52: Brennstoffbypassventil
- 53: Luftbypassventil
- 54: Brennstoffversorgungsleitung
- 55: Luftleitung
- 181: Niederdruckverdichter
- 182: Hochdruckverdichter
- 201: Niederdruckturbine
- 202: Hochdruckturbine
- 331: ACS-Verdichter
- 332: erste ACS-Turbine
- 333: zweite ACS-Turbine
- 334: ACS-Welle
- 335: ACS-Generator
- B: Brennstoffstrom
- D: Triebwerksdrehachse
- L: Luftstrom
- FS: Flugzeugseite
- S: Systemgrenze
- TS: Triebwerksseite
- T: Brennstofftemperatur
- Z: Zapfluft

## Patentansprüche

1. Flugzeugantrieb (10), aufweisend ein Triebwerk (11), eine Brennstoffversorgungseinrichtung (12), eine Luftkühleinrichtung (13) und eine Wärmetauscheinrichtung (50), wobei die Wärmetauscheinrichtung (50) eingerichtet ist, thermische Energie zwischen einem Brennstoffstrom (B) der Brennstoffversorgungseinrichtung (12) und einem Luftstrom (L) der Luftkühleinrichtung (13) zu übertragen.

2. Flugzeugantrieb (10) nach Anspruch 1, wobei die Brennstoffversorgungseinrichtung (12) eingerichtet ist, einen Brennstoff (B) zur Verbrennung in dem Triebwerk (11) des Flugantriebs (10) bereitzustellen.

3. Flugzeugantrieb (10) nach einem der vorhergehenden Ansprüche, wobei die Brennstoffversorgungseinrichtung (12) einen Tank (41), und nacheinander von dem Brennstoffstrom (B) durchströmbar wenigstens eine Pumpe (42, 46), eine Steuerungseinrichtung (44) und eine Brennstoffmesseinrichtung (47) aufweist.

4. Flugzeugantrieb (10) nach wenigstens einem der vorhergehenden Ansprüche, wobei die Luftkühleinrichtung (13) wenigstens eine erste Luftwärmetauscheinrichtung (31) aufweist, die eingerichtet ist, eine Zapfluft (Z) des Triebwerks (11) zu kühlen, und eine zweite Luftwärmetauscheinrichtung (32) aufweist, die eingerichtet ist, die mittels eines Verdichters (331) der Luftkühleinrichtung (13) verdichtete Zapfluft (Z, L) zu kühlen.

5. Flugzeugantrieb (10) nach Anspruch 4, wobei die erste Luftwärmetauscheinrichtung (31) und/ oder die zweite Luftwärmetauscheinrichtung (32) in wenigstens einem Nebenstromkanal (16) des Flugzeugantriebs (10) angeordnet ist.

6. Flugzeugantrieb (10) nach wenigstens einem der vorhergehenden Ansprüche, wobei die Wärmetauscheinrichtung (50) wenigstens ein in der Brennstoffversorgungseinrichtung (12) angeordnetes Brennstoffbypassventil (52) aufweist, welches in Abhängigkeit einer Brennstofftemperatur schaltbar ist.

7. Flugzeugantrieb (10) nach wenigstens einem der vorhergehenden Ansprüche, wobei die Wärmetauscheinrichtung (50) wenigstens ein in der Luftkühleinrichtung (13) angeordnetes Luftbypassventil (53) aufweist, welches in Abhängigkeit der Brennstofftemperatur schaltbar ist.

8. Flugzeugantrieb (10) nach Anspruch 6 oder 7, wobei das wenigstens eine Brennstoffbypassventil (53) in Strömungsrichtung des Brennstoffstroms vor einer Ölkühleinrichtung (45) der Brennstoffversorgungseinrichtung (12) und/ oder vor der Steuerungseinrichtung (44) und/ oder nach der Brennstoffmesseinrichtung (47) und/ oder nach einer nach der Brennstoffmesseinrichtung (47) angeordneten zweiten Pumpe (46) angeordnet ist.

9. Flugzeugantrieb (10) nach wenigstens einem der Ansprüche 6 bis 8, wobei das wenigstens eine Luftbypassventil (53) in Strömungsrichtung des Luftstroms nach der zweiten Luftwärmetauscheinrichtung (32) und/ oder nach einer ersten Kühlturbine (332) und/ oder einer zweiten Kühlturbine (333) der Luftkühleinrichtung (13) angeordnet ist.

10. Verfahren (100) zum Betreiben eines Flugzeugantriebs (10), aufweisend ein Triebwerk (11), eine Brennstoffversorgungseinrichtung (12), eine Luftkühleinrichtung (13) und wenigstens eine Wärmetauscheinrichtung (50), aufweisend die folgenden Schritte:
a) Durchströmen der Brennstoffversorgungseinrichtung (12) mit Brennstoff zum Verbrennen in dem Triebwerk (11) des Flugantriebs (10),
b) Durchströmen der Luftkühleinrichtung (13) mit Luft, und
c) Übertragen von thermischer Energie zwischen dem Brennstoff und der Luft mittels der wenigstens einen Wärmetauscheinrichtung (50).

11. Verfahren (100) nach Anspruch 10, wobei die Wärmetauscheinrichtung (50) wenigstens ein in der Brennstoffversorgungseinrichtung (13) angeordnetes Brennstoffbypassventil (52) und wenigstens ein in der Luftkühleinrichtung (12) angeordnetes Luftbypassventil (53) aufweist und diese wenigstens zwei Bypassventile (52, 53) in Abhängigkeit einer Brennstofftemperatur geschaltet werden.

12. Verfahren (100) nach Anspruch 10, wobei das wenigstens eine Brennstoffbypassventil (53) in Strömungsrichtung des Brennstoffstroms vor einer Ölkühleinrichtung (45) der Brennstoffversorgungseinrichtung (12) und/ oder vor der Steuerungseinrichtung (44) und/ oder nach der Brennstoffmesseinrichtung (47) und/ oder nach einer nach der Brennstoffmesseinrichtung (47) angeordneten zweiten Pumpe (46) angeordnet ist.

13. Verfahren (100) nach Anspruch 11 oder 12, wobei das wenigstens eine Luftbypassventil (53) in Strömungsrichtung des Luftstroms nach der zweiten Luftwärmetauscheinrichtung (32) und/ oder nach einer ersten Kühlturbine (332) oder einer zweiten Kühlturbine (333) der Luftkühleinrichtung (12) angeordnet ist.
